Europäisches Patentamt

European Patent Office

Office européen des brevets

(11) Publication number: **0 388 756**
**A2**

## EUROPEAN PATENT APPLICATION

(21) Application number: **90104695.3**

(22) Date of filing: **13.03.90**

(51) Int. Cl.5: **B60R 25/10, G08B 25/10, G08B 7/06**

(30) Priority: **24.03.89 IT 1991389**

(43) Date of publication of application:
**26.09.90 Bulletin 90/39**

(84) Designated Contracting States:
**AT BE CH DE DK ES FR GB GR LI NL SE**

(71) Applicant: **Di Dio Russo, Vincenzo**
**Via Santuario Sacro Cuore, 3**
**I-20161 Milan(IT)**

(72) Inventor: **Di Dio Russo, Vincenzo**
**Via Santuario Sacro Cuore, 3**
**I-20161 Milan(IT)**

(74) Representative: **Luksch, Giorgio, Dr.-Ing. et al**
**Ing. A. Giambrocono & C. S.r.l. Via Rosolino**
**Pilo, 19/b**
**I-20129 Milano(IT)**

(54) **Vehicle antitheft device with means for remotely indicating a break-in attempt.**

(57) A vehicle antitheft device comprises a known circuit block (1) for operating an audible or visual alarm (15) when the vehicle suffers a break-in attempt. The antitheft device comprises, associated with said circuit block (1), means (36) for generating a coded radio signal when the break-in attempt takes place, said radio signal being remotely received by receiver means (30) associated with a portable member (3) comprising an electrical circuit in which audible and/or visual signalling means (41, 43) are provided to warn of said break-in attempt.

As the range of action of the means for generating said radio signal is limited, a device (9) associated with the circuit block (1) of the antitheft device is provided to activate said circuit block if the vehicle is removed from its parked position.

Fig. 1

EP 0 388 756 A2

This invention relates to a vehicle antitheft device.

Various types of vehicle antitheft devices have been known and commercially available for some time, they generally comprising an electrical or electronic circuit which is activated when the vehicle suffers a break-in attempt.

Such a circuit usually prevents vehicle ignition while at the same time operating a usual audible alarm (which can be the vehicle horn) and/or the vehicle indicator lamps.

With this type of antitheft device there is the possibility that the audible (or visual) alarm, which is operated by the antitheft device following the break-in attempt, is not noticed by the vehicle user because at that moment he is located for example in a position or place in which it is impossible to hear the noise of said audible alarm .

In addition, to prevent alarm operation, especially of the audible alarm, it often happens that the suspects remove the vehicle from its rest position, ie its parked position in which the user has left his vehicle overnight, by lifting it and placing it on another vehicle. The vehicle is then moved to a secluded zone and there forcibly entered. In this manner as the alarm operation is not noticed by anybody, the suspects have all the time they require for tampering with the electrical circuit which powers it, so stopping its operation and enabling them to work on the vehicle, for example to remove parts which are then reused or resold as spares.

An object of the present invention is therefore to provide a vehicle antitheft device which enables the user of the vehicle on which the antitheft device is mounted to become aware of the break-in attempt even when he is in a position or place in which he cannot receive the sound signal (nor obviously the visual signal) of the alarms operated by the antitheft device following the break-in attempt.

A further object is to provide an antitheft device which is activated if the vehicle is removed from its rest position. These and further objects which will be apparent to the expert of the art are attained by an antitheft device of the aforesaid type, characterised by comprising, associated with the electrical or electronic circuit of the antitheft device, means for generating a coded radio signal when the break-in attempt takes place, said radio signal being remotely received by receiver means associated with a portable member, said receiver means being connected to means which on receipt of the signal activate audible and/or visual signalling means (41, 43) to warn of said break-in attempt. According to an important characteristic of the invention, the antitheft device is further characterised by comprising means for activating the electrical or electronic circuit of the antitheft device if the vehicle is removed from its parked position, said means monitoring the distance of part of the vehicle from a reference point and activating said circuit if this distance changes.

The present invention will be more apparent from the accompanying drawing which is provided by way of non-limiting example and in which:

Figure 1 is a block diagram of the antitheft device according to the invention;

Figure 2 is a simplified circuit diagram of one of the components of the antitheft device of Figure 1;

Figure 3 is a simplified circuit diagram of part of the antitheft device of Figure 1;

Figure 4 is a schematic perspective view showing the installation of part of the circuit of Figure 3 on a vehicle member.

With reference to said figures, the antitheft device according to the invention comprises a part 1 which is mounted on a vehicle, and a portable part 2 by which a user in possession of said vehicle can activate or deactivate the antitheft device (by radio pulses as shown, or by infrared rays or other known methods).

According to the invention the antitheft device is provided with a third part 3, also portable, which allows remote indication of the operation of the antitheft device in the case of a vehicle break-in attempt.

Specifically, the antitheft device 1 comprises a known central control unit 4 for the antitheft device, which receives signals from the ignition circuit 5, from electrical circuits 6 connected to the doors, hood and boot, from an impact sensor 7 and from an ultrasonic circuit 8 provided within the passenger compartment. The circuits 5, 6 and 8 and the sensor 7 are of known type and all or only some of them may be provided on the vehicle.

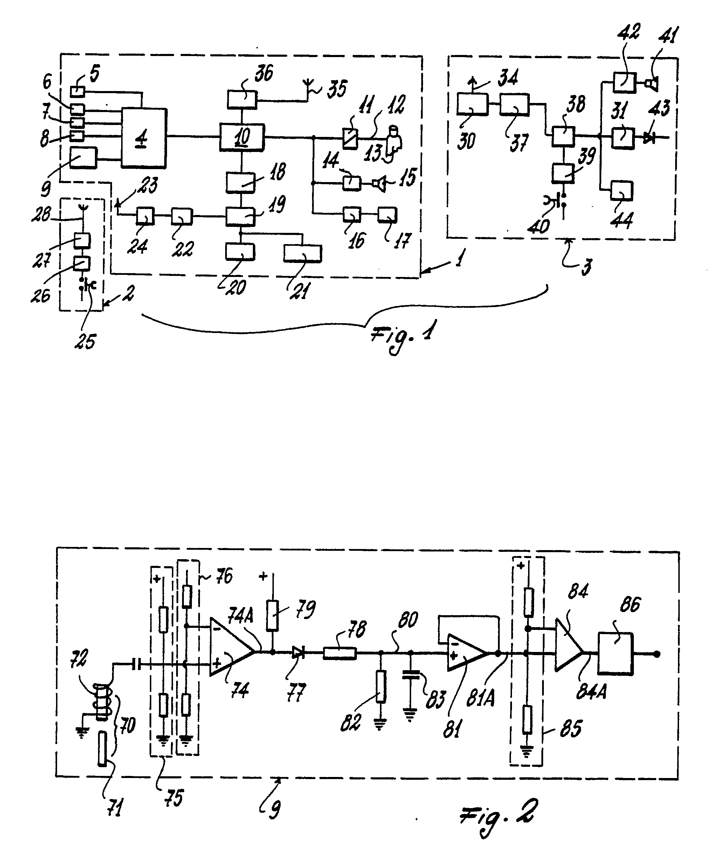

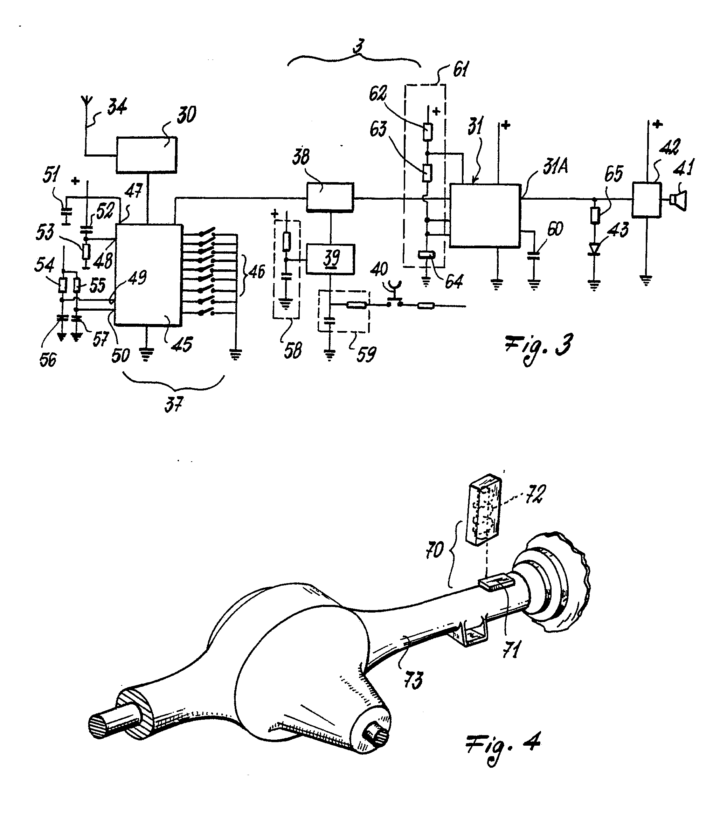

There is also connected to the central control unit a device 9 which senses any shifting, and in particular lifting, of the vehicle. One form of the device 9 is shown in Figure 2, and a possible application of it to said vehicle is show in Figure 4. Said circuit is described hereinafter.

The central control unit 4 is connected to a usual bistable circuit 10 which in known manner acts on a relay 11 connected to the feed line 12 of the vehicle electrical circuit which extends from the usual coil 13 with which the vehicle is provided (or from the diesel oil solenoid valve in the case of a diesel vehicle).

The central control unit 4 is also connected to a usual circuit 14 for operating the vehicle horns (only one of which is shown in the figure). The bistable circuit 10 is connected to a pulse counter 16 connected to a display 17, said counter 16 and said display 17 enabling any false alarms generated by erroneous signals produced by the block 1 of the antitheft device to be shown. In this respect, the pulse counter 16 increments the value on the display 17 each time a signal is emitted by the bistable circuit 10 and reaches the vehicle horn 15.

The bistable circuit is connected to a usual timer 18 for interrupting the activation command for the horn 15 at predetermined intervals, said timer 18 being connected to a known circuit 19 for the activation/deactivation of the circuit block 1. The activation/deactivation circuit 19 is connected in known manner to control circuits 20 for the vehicle door locks and direction indicators respectively.

Said activation/deactivation circuit 19 is also connected to a usual decoder 22 for a radio signal received via the antenna 23 and a receiver 24, and fed by the radio control device 2. This latter comprises a pushbutton 25, a coded radio signal generator 26 and a transmitter 27 connected to an antenna 28. This radio control device is known in terms both of its components and of its operation.

According to the invention, the antitheft device is provided with the remote indicator 3.

The remote indicator 3 comprises a frequency modulation radio receiver 30 connected to an antenna 34 arranged to receive a coded radio signal transmitted by an antenna 35 connected to a coder-transmitter 36 connected to the bistable bistable circuit 10 in the block 1 of the antitheft device.

The radio receiver 3 is connected to a monostable decoder 37 connected to a bistable circuit 38; this circuit is connected to a manual reset means 39 which the user operates by a pushbutton 40, to an audible signalling means 41 via a multivibrator 42, and to a light emitting diode (LED) display 43 via a pulse forming network 31.

There is also a telephone dialler 44 which can be connected to a telephone line by connecting the remote indicator 3 to a suitable known modem (not shown) connected to a telephone. Said modem is also provided with a battery charger for recharging batteries with which the indicator 3 is provided.

One embodiment of the remote indicator 3 is shown in Figure 3. In this figure parts equal to those of Figure 1 are indicated by the same reference numerals.

Specifically, the decoder 37 comprises a central control unit 45 to which there are connected switches 46 which when closed in a predetermined order form the recognition code for the radio signal from the radio receiver 30.

To inputs 47, 48, 49 and 50 of the central control unit 45 there are also connected a capacitor 51, a capacitor 52 and resistor 53, resistors 54, 55 and capacitors 56 and 57. These RC circuits define the duration of the input signal to the central control unit 45 (from the radio receiver 30) and the duration of the output signal (directed to the bistable circuit 38).

The bistable circuit 38 and the manual reset means are flip-flops. The means 39 is connected to a RC circuit 58 which on switching on the remote indicator 3 automatically resets this indicator for the reception of the radio signal from the block 1 of the antitheft device.

The means or flip-flop 39 is also connected to the pushbutton 40 via a further RC circuit 59 which acts as a known anti-bounce circuit to eliminate possible erroneous contacting by said pushbutton.

The pulse forming network 31 is an astable multivibrator generating a square wave signal at its output 31A; the forming network 31 is known and is connected to earth via a capacitor 60 which filters the reference voltage used to generate the square wave. The forming network 31 is also associated with a circuit 61 comprising resistors 62 and 63 and a capacitor 64, fed by a threshold voltage generated by the forming network 31 and acting as a stabilizer for the circuit part downstream of said forming network and as a generator for the oscillation time of the multivibrator 31 (and thus for the frequency of the pulses generated by this latter).

Finally the forming network or multivibrator 31 is connected to the LED 43 via a resistor 65 and to the multivibrator 42. The use of the antitheft device according to the invention is as follows: following a break-in attempt, the central control unit 4 of the block 1 of the antitheft device senses this attempt and in known manner the bistable circuit 10 cuts off power to the vehicle electrical circuit and operates the horns 15 and indicator lamps 21.

At the same time the bistable circuit 10 feeds a signal to the coder-transmitter 36 which generates a radio signal which via the transmitter antenna 35 and receiver antenna 36 reaches the radio receiver 30. From this latter the coded radio signal reaches the central control unit 45 of the decoder 37.

In said central control unit the received radio signal is compared with the code set by the switches 46. If the codes coincide, the central control unit 45 emits a logic signal 1 (of duration defined by the RC circuit comprising the resistors 54 and 55 and capacitors 56 and 57) which reaches the bistable circuit or flip-flop 38. The flip-flop 38 changes its logic state to provide at its output a logic signal 1.

The output signal of the flip-flop 38 activates the multivibrator 31 which generates a square wave train of frequency defined by the RC circuit 61, to activate the LED 43 and multivibrator 42, which operates the audible signalling means 41.

Thus in this manner even if the user of the vehicle on which the antitheft device is mounted does not hear the noise of the audible alarms 15, he is nevertheless warned of the break-in attempt on the vehicle.

It is also possible to connect the indicator 3 to the telephone line via said telephone dialler and modem, so that the the vehicle user can be warned of the break-in attempt even at a distance greater than that of the range of the transmitter 36.

When the alarm signal has stopped, the vehicle user can reset the flip-flop by the pushbutton 40. Specifically, operating this latter changes the logic state of the flip-flop 39, which generates a signal to return the flip-flop 38 to logic state 0.

In addition, as the decoder 37 is monostable and therefore after a certain time interrupts generation of the output signal, so resetting the flip-flop 38, the circuit associated with the indicator 3 is therefore returned to its initial conditions and is able to again, in the case of a further break-in attempt, to warn the user of this further attempt.

Finally, it should be noted that the coder-transmitter 36 generates radio pulses at predetermined intervals; this economizes consumption of the vehicle battery.

However, as stated the range of action of the transmitter 36 is limited. Thus in the case of an antitheft device which operates only on the opening of a door, the hood or the boot or on breakage of a vehicle window, the suspects could get round the antitheft device by moving the vehicle into a zone out of public view away from the zone in which it is parked, and force the vehicle to then shut off the signal to the audible alarms of sid antitheft device. The invention therefore also comprises the anti-shift device 9.

The device 9 (see Figures 2 and 4) comprises a magnetostriction device 70 comprising a magnet 71 and a coil 72 associated with a part of the vehicle body, said magnet 71 being associated with one of the vehicle axle shafts 73.

The coil 72 is connected to the non-inverting output of a comparator 74; voltage dividers 75, 76 are provided at this output and at the inverting output to fix an intervention threshold for the comparator 74.

The output 74A of said comparator is connected to a diode 77 which is connected in series with a resistor 78. A further resistor 79 is connected to said output 74A.

From the resistor 78 there extends a branch 80 which terminates at the non-inverting output of an impedance matching amplifier 81, and to which a parallel-connected resistor 82 and capacitor 83 are connected.

The output 81A of the amplifier 81 is connected to a comparator 84, the other input of which is connected to a resistance divider 85.

The output 84A of the comparator 84 is connected to a flip-flop 86 which is connected to the central control unit 4.

It will now be assumed that the vehicle fitted with the described antitheft device is shifted from its parked position.

As a result of the movement of the vehicle, the magnet 71 approaches the coil 72. Proximity signals are therefore generated by the sensor 70 and reach the comparator. In particular, the movement of the magnet 71 in the vicinity of the coil results in the generation of a sinusoidal signal which, should this movement continue, exceeds a threshold value defined by the voltage dividers 75 and 76. The comparator 74 therefore generates pulse logic signal (square waves) as a function of the vehicle movement, this charging the capacitor 83.

A voltage increase therefore occurs across said capacitor. If the logic signals from the comparator 74 continue, when the voltage across the capacitor 84 exceeds a threshold value defined by the voltage divider 85, a signal flowing via the amplifier 81 to the comparator 84 causes this latter to generate a logic signal which switches the logic state of the flip-flop 86, which therefore generates a signal. This signal reaches the central control unit 4 which therefore activates the block 1 of the antitheft device and, in the described manner, the indicator 3.

It should be noted that the diode 77 prevents discharge of the capacitor 83 across the comparator, the discharge instead taking place across the resistor 82. The purpose of the resistor 78 is to slow down the charging of the capacitor, which would otherwise be almost instantaneous.

The sensor 70 can be replaced by a known proximity sensor. In this case it is no longer necessary to position the magnet 71 on the vehicle axle shaft 73, the sensor sensing the displacement of this axle shaft from a predetermined position. If this displacement exceeds preset limits, a signal is fed to the comparator 74.

The device 9 can also be formed by other means such as a sonar, which means however fall within the scope of the present invention.

## Claims

1. An antitheft device comprising a circuit block activated advantageously remotely by radio control, said circuit block comprising means for operating an audible or visual alarm and to cut off the power supply to the vehicle comprising the antitheft device following an attempted break-in, said antitheft device being characterised by comprising, associated with said circuit block (1), means (36) for generating a coded radio signal when the break-in attempt takes place, said radio signal being remotely received by receiver means (30) associated with a portable member (3), said receiver means (30) being connected to means (37, 38) which following receipt of the radio signal activate audible and/or visual signalling means (41, 43) to warn of said break-in attempt.

2. An antitheft device as claimed in claim 1, characterised by comprising a device (9) for activating the circuit block (1) of the antitheft device when the vehicle is removed from its parked position, said device (9) comprising means for monitoring the distance of part of the vehicle from a reference point and activating said circuit block (1) if this distance changes.

3. An antitheft device as claimed in claim 1, characterised in that the means for generating a coded radio signal are a coder-transmitter (36) associated with an antenna (35), said coder-transmitter (36) being connected to a usual device (10) in the circuit block (1) for operating the audible (15) and visual alarms on receipt of a signal generated by a usual electronic member (4) for detecting the break-in attempt.

4. An antitheft device as claimed in claim 1, characterised in that the receiver means are a receiver (30) provided with a receiving antenna (34), said receiver being connected to a decoder (37) which is connected to a bistable circuit (38), said bistable circuit being connected to a pulse forming circuit (31) to which the audible and/or visual signalling means (41, 43) are connected.

5. An antitheft device as claimed in claim 4, characterised in that the decoder is a monostable circuit comprising a member (45) which compares the signal originating from the receiver (30) with a preset coded signal, with said member (45) there being associated circuits which define the duration of the input signal to said member and define the duration of the signal generated by said member at its output.

6. An antitheft device as claimed in claim 4, characterised in that the bistable circuit (38) is a flip-flop, to said flip-flop there being connected a further bistable circuit (39) which resets the flip-flop when a pushbutton (40) is pressed.

7. An antitheft device as claimed in claim 4, characterised in that the audible signalling means (41) are connected to a multivibrator (42).

8. An antitheft device as claimed in claim 2, characterised in that the device (9) for detecting the shifting of the vehicle from its parked position comprises, associated with the vehicle, a sensor (70) which monitors its own distance from a reference point, said sensor (70) being connected to a circuit which on determining that its distance from said reference point has passed beyond a predetermined value generates a signal which activates the circuit block (1).

9. An antitheft device as claimed in claim 8, characterised in that the sensor (70) is of magnetostriction type, the reference point being defined by a magnet (71) associated with an axle shaft (73) of the vehicle.

10. An antitheft device as claimed in claim 8, characterised in that the sensor (70) is a proximity sensor and the reference point is defined by an axle shaft (73) of the vehicle.

11. An antitheft device as claimed in claim 8, characterised in that the circuit associated with the sensor (70) comprises comparator means (74) for comparing a signal generated by said sensor with a reference signal, means (83) for measuring the duration of the signal generated by said comparator means (74) following the comparison, said duration measurement means (83) generating, if the signal generated by the sensor (70) persists, a signal which is compared by comparator means (84) with a reference signal, with said comparator means (84) there being associated a bistable circuit connected to a device (4) of the circuit block (1) for detecting the break-in attempt.

12. An antitheft device as claimed in claim 2, characterised in that the device (9) for detecting the shifting of the vehicle from its parked position comprises a sonar.

13. An antitheft device as claimed in claim 1, characterised in that the circuit block (1) comprises means (16) for measuring the number of times the antitheft device is activated, and means (17) for displaying this number.

Fig. 1

Fig. 2

Fig. 3

Fig. 4